# EUROPEAN PATENT SPECIFICATION

(11) **EP 2 690 771 B1**
(45) Date of publication and mention of the grant of the patent: **18.12.2019**
(21) Application number: 13173789.2
(22) Date of filing: 26.06.2013
(51) Int. Cl.: H02M 3/00, H02M 1/14, H05B 33/08, H02M 3/155

(54) **Power supply device, lighting device, lighting fixture using the same, and vehicle**
Stromversorgungsvorrichtung, Beleuchtungsvorrichtung, Leuchte damit und Fahrzeug
Dispositif d'alimentation électrique, dispositif d'éclairage, appareil d'éclairage l'utilisant et véhicule

(30) Priority: 24.07.2012 JP 2012163846
(43) Date of publication of application: 29.01.2014
(73) Proprietor: Panasonic Intellectual Property Management Co., Ltd., Osaka-shi, Osaka 540-6207 (JP)
(72) Inventor: Kambara, Takashi, Chuo-ku, Osaka 540-6207 (JP)
(74) Representative: Appelt, Christian W.

(56) References cited:
- FR-A1- 2 845 559
- JP-A- 2002 159 172
- JP-A- 2009 284 721
- US-A- 6 144 565

## Description

### TECHNICAL FIELD

The invention relates to a power supply device, a lighting device, a lighting fixture using the same, and a vehicle.

### BACKGROUND ART

Conventionally, there has been a power supply device described in Japanese Patent Application Publication No. 2002-159172. As shown in Fig. 12, the conventional power supply device incudes a DC/DC converting circuit that converts a power-supply voltage of a DC power supply E1a to an intended DC voltage. The DC/DC converting circuit includes a switching element S1a, a transformer T1a, a diode D1a and a smoothing capacitor C1a. Both ends of a series circuit, constituted by a secondary winding N2a of the transformer T1a and the diode D1a, are connected via the smoothing capacitor C1a to a circuit element (the switching element S1a) in a closed circuit, which includes the DC power supply E1a, a primary winding N1a of the transformer T1a and the switching element S1a.

One end of an inductor L1a which serves as a filter is connected to a connecting point of the smoothing capacitor C1a and the secondary winding N2a. The other end of the inductor L1a is connected to an output terminal TO2a positioned at the low voltage side. One end of a capacitor COa which serves as a filter is connected to a connecting point of a cathode of the diode D1a and an output terminal TO1a positioned at the high voltage side. The other end of the capacitor COa is connected to the output terminal TO2a.

A control circuit CNa detects an output voltage (a voltage between the output terminals TO1a, TO2a) and an output current (a current flowing to a load Xa), and performs the switching control for the switching element S1a so that the output current reaches an intended current value (for example, PWM (Pulse Width Modulation) control).

Therefore, when the switching element S1a is in OFF, the energy which has been stored in the transformer T1a is released from the secondary winding N2a via the diode D1a. Then, the smoothing capacitor C1a is charged via the DC power supply E1a and the primary winding N1a. That is, the charging current flows from the DC power supply E1a to the smoothing capacitor C1a via the primary winding N1a. Therefore, the current ripple can be reduced with respect to the input current flowing from the DC power supply E1a to the DC/DC converting circuit.

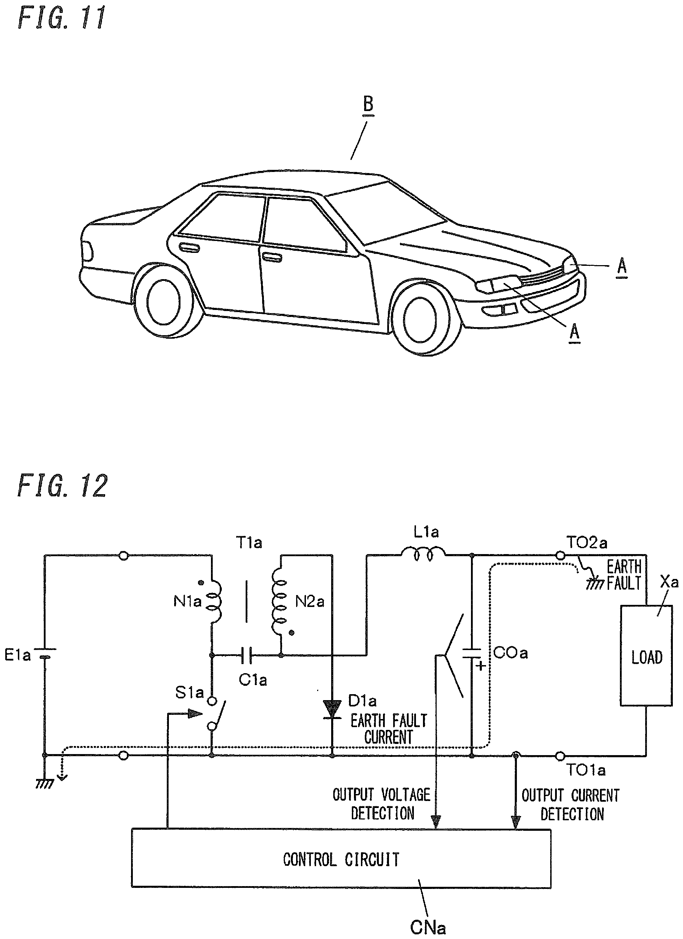

In the above conventional power supply device, when earth fault (electric leakage) is occurred at an output line that extends from the output terminal TO2a to the load Xa, the electric charges stored in the capacitor COa serving as a filter are released (discharge) and therefore the current leakage (earth fault current) flows through a path shown by a broken line in Fig. 12. In this case, because there is no current-limiting element, such as a resistor, at the path through which the earth fault current flows, there is a possibility that too much current flows as the earth fault current. As a result, the power supply device may have problems with the circuit (for example, such too much current may lead to the circuit's malfunction).

On the other hand, when the power supply device has a configuration that the control circuit CNa detects the output current flowing to the output terminal TO2a, the earth fault current superimposed on the output current is detected. In this case, the output current is controlled and therefore, the earth fault current is also controlled (suppressed). However, a problem may arise where the output current decreases by the earth fault current and electricity supplied to the load Xa decreases with a decrease in the output current. Or, the power supply device may have problems with the circuit due to flowing of the earth fault current.

JP 2002 159172 A describes a DC-DC converter having a switching element, a transformer, a diode, and a smoothing capacitor. Both ends of a series circuit of a secondary winding of the transformer and the diode are connected to a circuit element (switching element) of a closed circuit having a power source, a primary winding of the transformer and the switching element via the capacitor.

US 6,144,565 A describes a switched mode DC-DC power converter of the flyback type including a primary circuit and a secondary circuit capacitively coupled to one another.

### DISCLOSURE OF THE INVENTION

It is an object of the present invention to provide a power supply device, a lighting device, a lighting fixture using the same, and a vehicle, which can prevent problems from arising in the case where electric leakage is occurred.

A power supply device of the invention comprises: a switching element in which switching operation is performed at high frequency; a transformer comprising primary and secondary windings, a power-supply voltage of a DC power supply being applied to the primary winding via the switching element; and a rectifying element connected in series to the secondary winding of the transformer, and wherein a circuit element composed of at least one of the primary winding of the transformer and the switching element is connected to both ends of a series circuit, including the secondary winding of the transformer and the rectifying element, via first and second capacitors, and wherein the both ends of the series circuit is connected to a load directly or via a inductor.

In the power supply device, the primary winding of the transformer, the first capacitor, the secondary winding of the transformer, and an input side terminal of the rectifying element are connected in series in that order, wherein the primary winding of the transformer and the secondary winding of the transformer are connected to the first capacitor with anti-polarity, and wherein one end of the switching element is connected to a connecting point of one end of the primary winding of the transformer and the first capacitor, wherein one end of the inductor is connected to a connecting point of the first capacitor and the secondary winding of the transformer, wherein the second capacitor is connected between the other end of the switching element and an output side terminal of the rectifying element, wherein the other end of the primary winding of the transformer is connected to a positive electrode of the DC power supply, wherein a connecting point of the switching element and the second capacitor is connected to a negative electrode of the DC power supply, and wherein the load is connected between the other end of the inductor and a connecting point of the rectifying element and the second capacitor.

In the power supply device, preferably, the second capacitor has a larger electric capacity than the first capacitor.

In the power supply device, preferably, the control circuit is configured to monitor an output current supplied to the load, and to control the switching operation of the switching element so that the output current reaches a predetermined current value.

In the power supply device, preferably, in the transformer, a substantive turn ratio of the primary winding to the secondary winding is equal to or less than 3.

A lighting device of the invention uses any one of the above-mentioned power supply devices and the load is a lighting load comprising a solid-state light emitting element.

A lighting fixture of the invention comprises the lighting device, and a fixture body holding the lighting load.

A vehicle of the invention is equipped with the lighting fixture.

In the invention, there is an effect that the power supply device, the lighting device, and the lighting fixture using the same, and the vehicle can prevent problems from arising in the case where electric leakage is occurred.

### BRIEF DESCRIPTION OF THE DRAWINGS

Preferred embodiments of the invention will now be described in further details. Other features and advantages of the present invention will become better understood with regard to the following detailed description and accompanying drawings where:
Fig. 1A is a circuit diagram showing the state where a switching element is in ON, in a power supply device according to First Embodiment of the invention;
Fig. 1B is a circuit diagram showing the state where the switching element is in OFF, in the power supply device according to First Embodiment of the invention;
Figs. 2A to 2G are time charts for explaining operation normally, in the power supply device according to First Embodiment of the invention;
Fig. 3 is a time chart for explaining operation when earth fault is occurred, in the power supply device according to First Embodiment of the invention;
Fig. 4 is a time chart for explaining operation when earth fault is occurred, in the power supply device according to First Embodiment of the invention;
Fig. 5 is a circuit diagram showing a lighting device according to Second Embodiment of the invention;
Fig. 6 is a time chart for explaining operation normally, in the lighting device according to Second Embodiment of the invention;
Fig. 7 is a circuit diagram showing another power supply device and lighting device according to First or Second Embodiment of the invention;
Fig. 8 is a circuit diagram showing another power supply device and lighting device according to First or Second Embodiment of the invention;
Fig. 9 is a circuit diagram showing another power supply device and lighting device according to First or Second Embodiment of the invention;
Fig. 10 is a cross-section view showing a lighting fixture according to Third Embodiment of the invention;
Fig. 11 is a perspective view showing a vehicle according to Third Embodiment of the invention; and
Fig. 12 is a circuit diagram showing a conventional power supply device.

### BEST MODE FOR CARRYING OUT THE INVENTION

Power supply devices according to Embodiments of the invention will be described below in detail, referring to Figures.

### (First Embodiment)

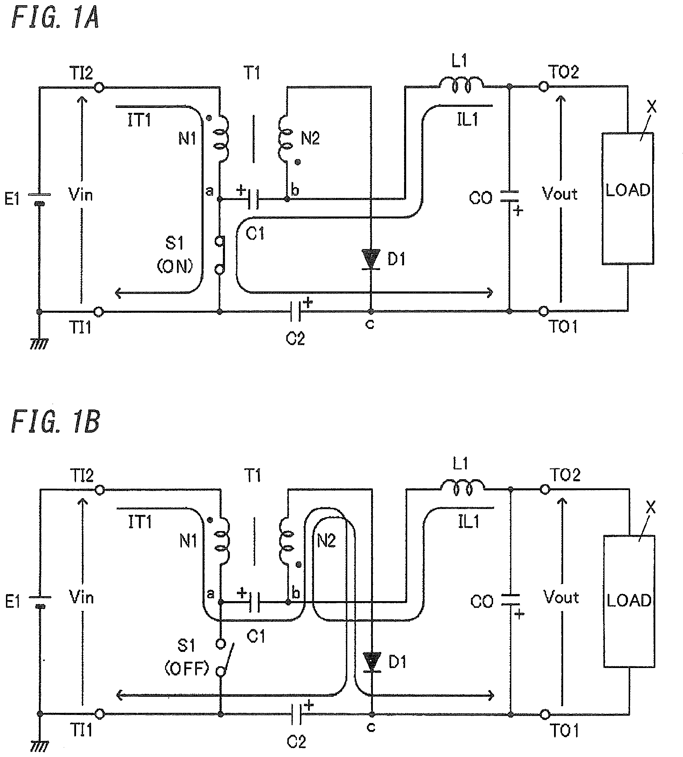

As shown in Fig1A, a power supply device according to the present embodiment incudes a DC/DC converting circuit that converts a power-supply voltage of a DC power supply E1 to an intended DC voltage. The DC/DC converting circuit includes: a switching element S1 in which switching operation is performed at high frequency; a transformer T1 including a primary winding N1 and a secondary winding N2, the power-supply voltage of the DC power supply E1 being applied to the primary winding N1 via the switching element S1; a diode (a rectifying element) D1 that is connected in series to the secondary winding N2 of the transformer T1; and a smoothing capacitor (a first capacitor) C1. Further, the power supply device according to the present embodiment includes a capacitor (a second capacitor) C2. Both ends of a series circuit constituted by the secondary winding N2 of the transformer T1 and the diode D1 are connected via the first and second capacitors C1, C2 to a circuit element (the switching element S1) in a closed circuit, which includes the DC power supply E1, the primary winding N1 of the transformer T1 and the switching element S1. In addition, both ends of the series circuit constituted by the secondary winding N2 of the transformer T1 and the diode D1 are connected to a load X via an inductor L1 serving as a filter.

Specifically, the primary winding N1 of the transformer T1, the first capacitor C1, the secondary winding N2 of the transformer T1, and an input side terminal of the diode D1 are connected in series in that order. One end of the switching element S1 is connected to a connecting point "a" of one end of the primary winding N1 of the transformer T1 and the first capacitor C1. One end of the inductor L1 is connected to a connecting point "b" of the first capacitor C1 and the secondary winding N2 of the transformer T1. The second capacitor C2 is connected between the other end of the switching element S1 and an output side terminal of the diode D1. The other end of the primary winding N1 of the transformer T1 is connected to a positive electrode of the DC power supply E1. A connecting point of the switching element S1 and the second capacitor C2 is connected to a negative electrode of the DC power supply E1. The load X is connected between the other end of the inductor L1 and a connecting point "c" of the diode D1 and the second capacitor C2, via output terminals TO2, TO1. Specifically, the other end of the inductor L1 is connected to the output terminal TO2 that is positioned at the low voltage side. One end of a capacitor CO serving as a filter is connected to a connecting point of a cathode of the diode D1 and the output terminal TO1 that is positioned at the high voltage side. The other end of the capacitor CO is connected to the output terminal TO2.

The switching element S1 includes a voltage driving type field-effect transistor for example, and the switching operation of the switching element S1 is controlled at high frequency (for example, hundreds kHz) through a drive signal provided from a control circuit (not shown) (PWM control). However, the switching control method for the switching element S1 is not limited to PWM control. For example, a method may be adopted in which the switching frequency is changed.

In Figs. 1A and 1B, an input voltage and an input current, which are applied between input terminals TI1, TI2 from the DC power supply E1, are denoted by Vin and IT1, respectively. An output voltage, which is applied between the output terminals TO1, TO2, is denoted by Vout. Then, signs of "+" are placed at high voltage sides of the capacitors C1, C2, CO.

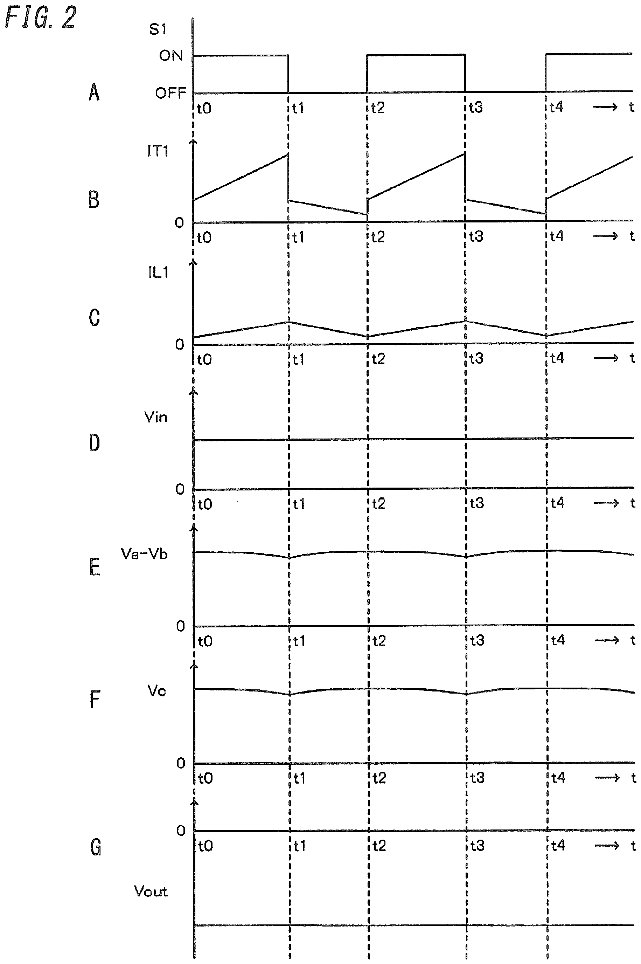

In the power supply device according to the present embodiment, the basic operation is explained, referring to circuit diagrams in Figs. 1A and 1B, and time charts in Figs. 2A to 2G. Here, a waveform in Fig. 2A shows a drive signal for the switching element S1, a waveform in Fig. 2B shows the input current IT1, a waveform in Fig. 2C shows an output current IL1, a waveform in Fig. 2D shows the input voltage Vin, a waveform in Fig. 2E shows a voltage potential difference Va-Vb between: the connecting point "a" of the first capacitor C1 and the switching element S1; and the connecting point "b" of the secondary winding N2 and the first capacitor C1, a waveform in Fig. 2F shows an electrical potential (a voltage between both ends of the second capacitor C2) Vc at the connecting point "c" of the second capacitor C2 and the diode D1, and a waveform in Fig. 2G shows the output voltage Vout.

First, when the switching element S1 is turned ON at a time t = t0, the input current IT1 supplied from the DC power supply E1 to the primary winding N1 of the transformer T1 is increased gradually and energy is stored in the transformer T1. When the switching element S1 is turned OFF at the time t = t1, the energy stored in the transformer T1 is released along a path that passes through the primary winding N1, the first capacitor C1, the secondary winding N2, the diode D1, the second capacitor C2, the DC power supply E1 and the primary winding N1, in that order (see Fig. 1B). Therefore, a voltage (voltage potential difference Va-Vb) between the both ends of the first capacitor C1, and the voltage Vc between the both ends of the second capacitor C2 are increased.

The electric charges, which have been stored in the first and second capacitors C1, C2 by charging before the time t = t0, are released during an ON period (a period between t0 and t1) when the switching element S1 is in ON. Thus, the output current IL1 flows along a path that passes through the first capacitor C1, the switching element S1, the second capacitor C2, the capacitor CO, the inductor L1 and the first capacitor C1, in that order, and energy is stored in the inductor L1 (see Fig. 1A).

On the other hand, the energy stored in the inductor L1 is released during an OFF period (a period between t1 and t2) when the switching element S1 is in OFF. Thus, the output current IL1 flows along a path that passes through the inductor L1, the secondary winding N2, the diode D1, the load X and the inductor L1, in that order (see Fig. 1B).

Also after the time t = t2, voltages and currents with the waveforms shown in Figs. 2A to 2G are generated by repeating the ON/OFF switching operation of the switching element S1, and thus, the power supply device according to the present embodiment supplies DC power to the load X.

That is, the operation of the power supply device according to the present embodiment is different from that of the conventional power supply device shown in Fig. 12 in that the function of the smoothing capacitor C1a in the conventional power supply device is shared by two capacitors (first and second capacitors) C1, C2. The amount of the voltage Va-Vb between the both ends of the first capacitor C1 and the amount of the voltage Vc between the both ends of the second capacitor C2 depend on a magnitude relationship between electric capacities thereof (that is, a capacity ratio). In the case of Figs. 2A to 2G, both electric capacities are equal to each other.

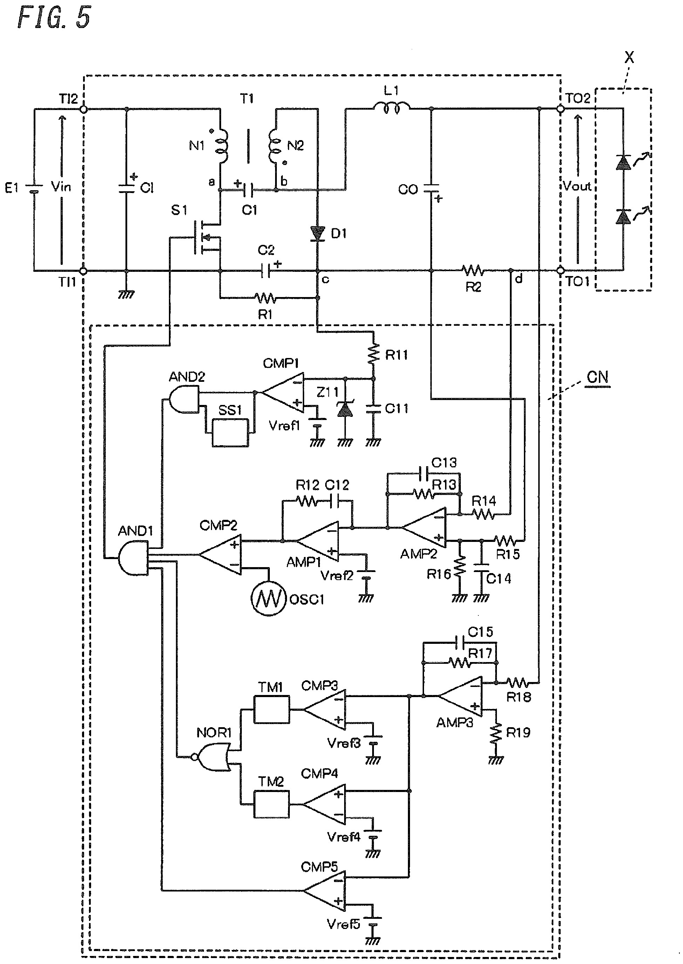

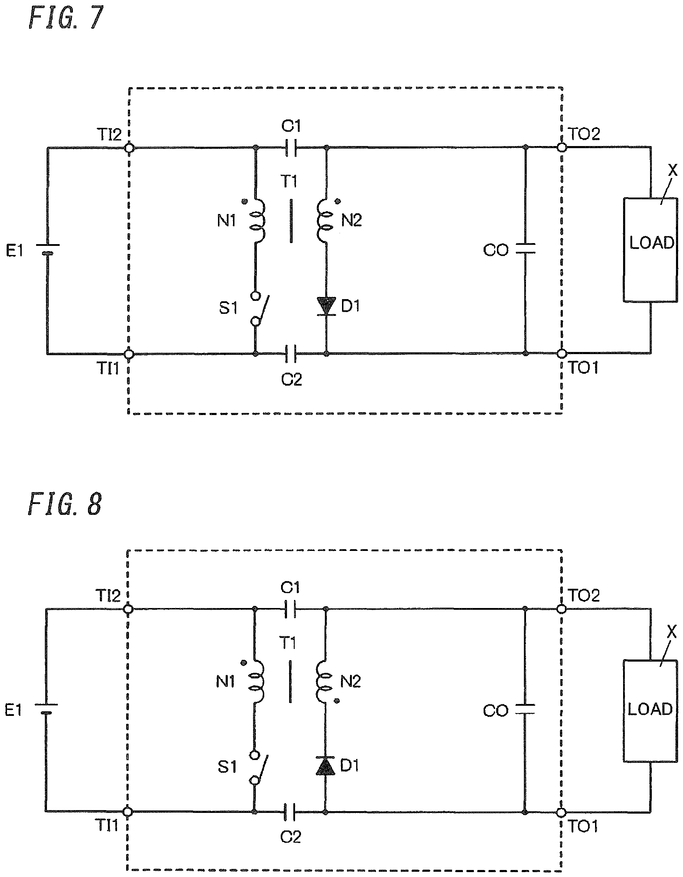

Here, the waveform of the input current IT1 shown in Fig. 2B instantaneously changes in synchronization with the switching operation of the switching element S1. Basically, the change rate of the input current IT1 depends on the substantive turn ratio of the transformer T1. In the present embodiment, because the primary and secondary windings N1, N2 of the transformer T1 are connected in series via the first capacitor C1, the substantive turn ratio of the transformer T1 is a value obtained by dividing a sum of the number of turns in the primary winding N1 and the number of turns in the secondary winding N2 by the number of turns in the primary winding N1. In order to reduce ripple in the input current IT1 and the size of the transformer T1, preferably, the turn ratio is set so as to be equal to or less than 3, and, more preferably, so as to be equal to or less than 2. The turn ratio is properly selected depending on the type of the load X. In this case, Figs. 1 and 5, because the primary and secondary windings N1, N2 of the transformer T1 are connected in series, when the switching element S1 is turned ON, the current flows through the primary winding N1 as the current pathway, and then when the switching element S1 is turned OFF, the current flows through the primary and secondary windings N1, N2 as the current pathway. Therefore, the substantive turn ratio is a value obtained by dividing a sum of the number of turns in the primary winding N1 and the number of turns in the secondary winding N2 by the number of turns in the primary winding N1. On the other hand, for example in Figs. 7, 8 and the like described below, when the switching element S1 is turned ON, the current flows through the primary winding N1 as the current pathway, and when the switching element S1 is turned OFF, the current flows through the secondary winding N2 as the current pathway. Therefore, the substantive turn ratio is a value obtained by dividing the number of turns in the secondary winding N2 by the number of turns in the primary winding N1, and in this case, preferably, the substantive turn ratio is set so as to be equal to or less than 3.

The characteristic operation in the present embodiment, that is, the operation in the case where electric leakage (earth fault or supply fault) is occurred will be explained below.

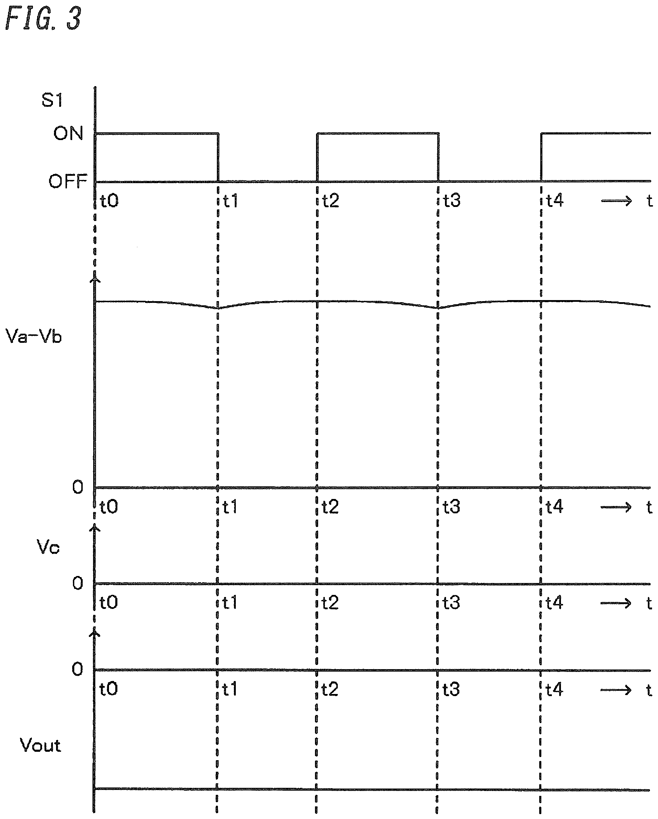

First, the operation is explained referring to a time chart in Fig. 3, in the case where the earth fault is occurred at the output terminal TO1 that is positioned at a high voltage side. When the earth fault is occurred at the output terminal TO1 of the high voltage side, an electrical potential of the output terminal TO1 is fixed at a ground level. Therefore, the voltage Vc between both ends of the second capacitor C2 is also reduced to the ground level. On the other hand, the voltage Va-Vb between both ends of the first capacitor C1 is increased. In this case, the earth fault current does not flow, and even if the switching operation of the switching element S1 is continued by the control circuit, the power supply device has no problem in particular.

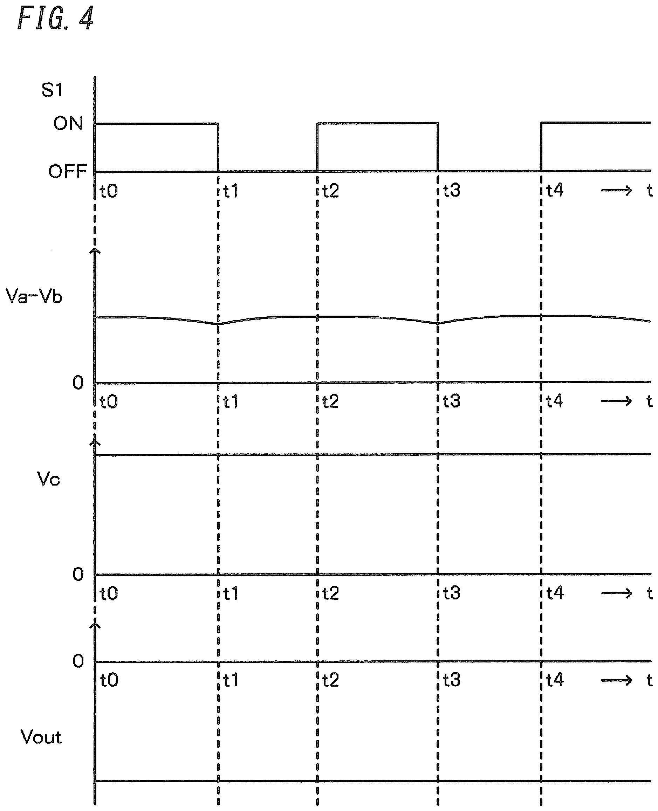

Next, the operation is explained referring to a time chart in Fig. 4, in the case where the earth fault is occurred at the output terminal TO2 that is positioned at a low voltage side. In the conventional power supply device, when the earth fault is occurred at the output terminal TO2a of the low voltage side, electric charges, which have been stored in the capacitor COa serving as a filter by charging, are released to ground via the input terminal, and therefore, current leakage (earth fault current) flows. On the other hand, in the present embodiment, the second capacitor C2 is inserted between a high voltage side terminal of the capacitor CO and the input terminal TI1, and then the input side connected to the DC power supply E1 is galvanically separated from the output side connected to the load X by the second capacitor C2. Therefore, the earth fault current does not continually flow. Also in this case, even if the switching operation of the switching element S1 is continued by the control circuit, the power supply device has no problem in particular.

Similarly, even when conduction state is occurred between one of the output terminals TO1, TO2 and a positive electrode of the DC power supply E1 (the supply fault), current caused by the supply fault does not continually flow. Therefore, even if the switching operation of the switching element S1 is continued by the control circuit, the power supply device has no problem in particular.

As described above, the power supply device of the present embodiment can reduce the current leakage flowing to circuit, when electric leakage (earth fault or supply fault) is occurred. As a result, the power supply device can prevent problems (the circuit's malfunction or the like) associated with the electric leakage.

In addition, if the second capacitor C2 has a larger electric capacity than the first capacitor C1, the output voltage Vout applied to the output terminal TO1 of the high voltage side can be set so as to be closer to the ground level.

### (Second Embodiment)

As shown in Fig. 5, a power supply device according to the present embodiment is characterized in that a resistor R1 is connected in parallel to the second capacitor C2, in that a smoothing capacitor CI is connected in parallel to the input terminals TI1, TI2, and in the configuration of a control circuit CN. The other constituent elements are similar to those of First Embodiment. Therefore, such elements are assigned with same reference numerals and the explanation thereof is properly omitted. Here, the load X in the present embodiment is a lighting load that includes a series circuit or a series-parallel circuit of a plurality of solid-state light emitting elements (such as light emitting diodes, or organic electroluminescence elements). The power supply device according to the present embodiment corresponds to a lighting device that lights the lighting load.

The control circuit CN in the present embodiment includes: a differential amplifier circuit having an operational amplifier AMP2, capacitors C13, C14 and resistors R13 to R16; and an error operational circuit having an operational amplifier AMP1, a capacitor C12 and a resistor R12. The differential amplifier circuit amplifies a voltage (a voltage proportional to a current value of the output current) between both ends of a sense resistor R2 which is inserted between the output terminal TO1 of the high voltage side and the second capacitor C2, and outputs the amplified voltage to the error operational circuit. The error operational circuit amplifies a difference between the amplified output voltage of the differential amplifier circuit and a reference voltage Vref2. The control circuit CN further includes a comparator CMP2 that compares the output of the error operational circuit with a reference oscillation signal output from an oscillating circuit OSC1. In other words, an output of the comparator CMP2 is at a high level, when the output voltage of the error operational circuit exceeds a signal voltage of the reference oscillation signal. The output of the comparator CMP2 is at a low level, when the output voltage of the error operational circuit is equal to or less than the signal voltage of the reference oscillation signal. Then, the output of the comparator CMP2 is input to an AND-circuit (AND-gate) AND1.

The control circuit CN further includes a no-load/short-circuit protection circuit that protects circuit. The no-load/short-circuit protection circuit detects: a no-load condition (opened condition) in which the load X is not connected to the output terminals TO1, TO2; and a condition in which short-circuit is generated between the output terminals TO1, TO2. Then, the no-load/short-circuit protection circuit includes: an inverting amplifier circuit having an operational amplifier AMP3, a capacitor C15, and resistors R17 to R19; three comparators CMP3, CMP4, CMP5; two timers TM1, TM2; and a NOR-circuit (NOR-gate) NOR1. The inverting amplifier circuit inverts and amplifies the output voltage Vout applied to the load X to output into the comparators CMP3, CMP4, CMP5.

The comparator CMP5 compares the output voltage of the inverting amplifier circuit with a reference voltage Vref5. Then, the output of the comparator CMP5 is at a low level, when the output voltage of the inverting amplifier circuit exceeds the reference voltage Vref5 in the case where the power supply device is in the no-load condition. The output of the comparator CMP5 is at a high level, when the output voltage of the inverting amplifier circuit is equal to or less than the reference voltage Vref5 in the case where the power supply device is not in the no-load condition.

On the other hand, the outputs of the other two comparators CMP3, CMP4 are at low levels, when the output voltage of the inverting amplifier circuit is within a normal range between two reference voltages Vref3, Vref4 (in this case, Vref5 > Vref4 > Vref3). Then, one of those outputs is at high levels, when the output voltage of the inverting amplifier circuit is out of the normal range. Here, the respective timers (time-delay circuits) TM1, TM2 are connected to the output terminals of the comparators CMP3, CMP4. When the outputs of the comparators CMP3, CMP4 rise from the low levels to the high levels, the timers TM1, TM2 are activated, and start measuring predetermined times (e.g., 100ms) as count values, respectively. When the outputs of the comparators CMP3, CMP4 drop from the high levels to the low levels before the measurements of the predetermined times are completed, the count values in the timers TM1, TM2 are reset and then the outputs are kept at the low levels. On the other hand, when the measurements of the predetermined times are completed while the outputs of the comparators CMP3, CMP4 are kept at the high levels, the outputs of the timers TM1, TM2 are changed to the high levels. Therefore, the output of the NOR-gate NOR1 is kept at the high level, when the output voltage of the inverting amplifier circuit is higher than the low reference voltage Vref3 and is lower than the high reference voltage Vref4. On the other hand, the output of the NOR-gate NOR1 is changed to the low level, when the condition that the output voltage of the inverting amplifier circuit is equal to or less than the low reference voltage Vref3 or the condition that the output voltage of the inverting amplifier circuit is equal to or more than the high reference voltage Vref4 is continued over the predetermined time.

Further, the control circuit CN includes an electric leakage detecting circuit. This electric leakage detecting circuit includes: a filter circuit (an integrating circuit) having a resistor R11 and a capacitor C11; a comparator CMP1; a time-delay circuit SS1; an AND-circuit (AND-gate) AND2; a zener diode Z11; and the like. The comparator CMP1 compares the voltage Vc between both ends of the second capacitor C2, input via the filter circuit, with a reference voltage Vref1. Then, the output of the comparator CMP1 is at the high level, when the voltage Vc is equal to or less than the reference voltage Vref1. The output of the comparator CMP1 is at the low level, when the voltage Vc exceeds the reference voltage Vref1. Here, the zener diode Z11 is connected to a minus terminal of the comparator CMP1, and is connected in parallel to the filter circuit. Thus, the zener diode Z11 prevents too much voltage, which exceeds a zener voltage, from being input to the minus terminal.

The AND-gate AND2 operates a logical AND of the output of the comparator CMP1 and the output of the time-delay circuit SS1, and outputs to the AND-gate AND1. That is, when a period, during which the output of the comparator CMP1 is continually kept at the low level, exceeds a delay time (e.g., 1ms), the output of the time-delay circuit SS1 is changed from the high level to the low level. Then, when the period is less than the delay time, the output of the time-delay circuit SS1 is kept at the high level. When the power supply from the DC power supply E1 is stopped, the output of the time-delay circuit SS1 is reset. Then, when the power supply from the DC power supply E1 is restarted, the output of the time-delay circuit SS1 is kept at the high level. Here, the output of the time-delay circuit SS1 may be changed from the high level to the low level, when the condition that the output of the comparator CMP1 is changed from the high level to the low level is repeatedly occurred over a predetermined time (e.g., 1ms).

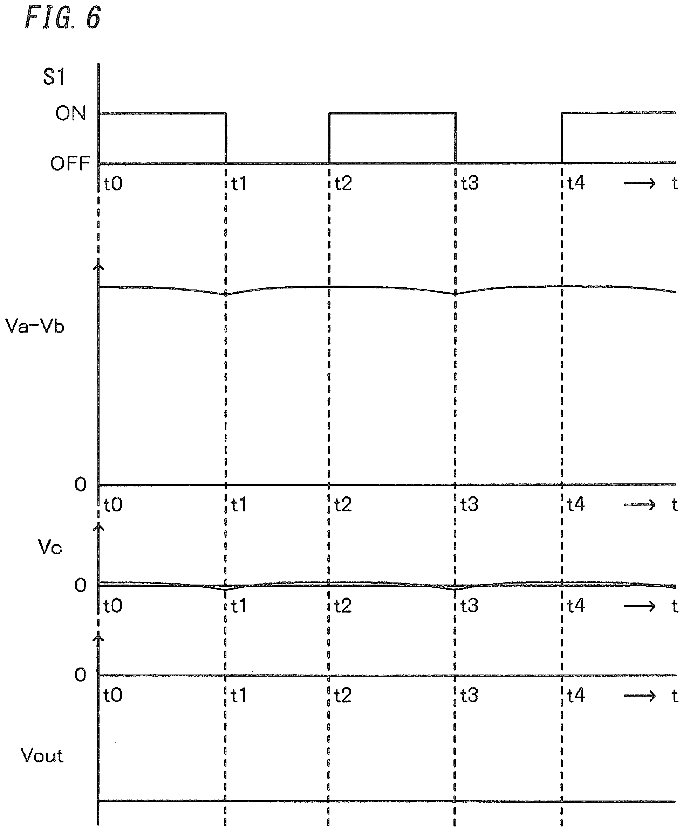

Then, if the no-load/short-circuit protection circuit and the electric leakage detecting circuit do not detect abnormity and high level signals are input from those circuits to the AND-gate AND1, the output of the AND-gate AND1 is changed depending on the output of the comparator CMP2. That is, the control circuit CN switches the switching element S1 at a frequency that is equal to an oscillation frequency of the reference oscillation signal, and adjusts an ON-period for the switching element S1 so that the output current (the load current) corresponds to a target value determined by the reference voltage Vref2. Here, Fig. 6 shows a time chart in the case where the resistor R2, connected in parallel to the second capacitor C2, has a relatively-small resistance value (e.g., 100Ω or less). Because the resistor R2 is connected in parallel to the second capacitor C2, the voltage Vc between both ends of the second capacitor C2 becomes substantively zero, as shown in Fig. 6.

Meanwhile, when abnormal condition, such as no-load condition or short-circuit condition, is occurred, the output of the no-load/short-circuit protection circuit is changed to the low level, and then, the output of the AND-gate AND1 is fixed at the low level. Therefore, the switching element S1 is kept in OFF-state and the power supply device (the lighting device) is deactivated.

In the case where electric leakage is occurred, the operation of the control circuit CN is explained below. First, when earth fault is occurred at the output terminal TO2 of the low voltage side, a voltage between both ends of the capacitor CO that serves as a filter is increased significantly, and the electrical potential (the voltage between both ends of the second capacitor C2) Vc at the point "c" is increased, and thus, a voltage input to the minus terminal of the comparator CMP1 exceeds the reference voltage Vref1. As a result, the output of the AND-gate AND2 is changed to the low level, and the output of the AND-gate AND1 is fixed at the low level. Therefore, the switching element S1 is kept in OFF-state and the power supply device (the lighting device) is deactivated. When supply fault is occurred at the output terminal TO2 of the low voltage side or at the output terminal TO1 of the high voltage side, the voltage Vc between both ends of the second capacitor C2 is increased and a voltage input to the minus terminal of the comparator CMP1 exceeds the reference voltage Vref1. Therefore, the power supply device (the lighting device) is deactivated.

Meanwhile, when earth fault is occurred at the output terminal TO1 of the high voltage side, a case is generated where two resistors R1, R2 are substantively connected in parallel. Then, a current is supplied to the load X via a parallel circuit of the two resistors R1, R2, due to a voltage which has been stored in the capacitor CO by charging. Therefore, the voltage Vc between both ends of the second capacitor C2 exceeds the reference voltage Vref1 and the power supply device can be deactivated, through properly determining the target value (the reference voltage Vref2) of the output current, the resistance values of the resistors R1, R2, and the reference voltage Vref1 of the electric leakage detecting circuit.

As described above, in the present embodiment, the control circuit CN halts the switching operation of the switching element S1 when electric leakage is occurred, thereby deactivating the power supply device (the lighting device). Therefore, the power supply device (the lighting device) can prevent problems from arising due to continuous flow of current leakage. Here, in the case where supply fault is occurred at the output terminal TO1 or the output terminal TO2, a current continually flows via the resistor R1. In this case, because this current is limited by the resistor R1, an effect on circuit is reduced.

In the case where earth fault is occurred at the output terminal TO1 of the high voltage side, the control circuit CN may continue to control the switching operation of the switching element S1, without need for detection of electric leakage in the electric leakage detecting circuit. For example, the reference voltage Vref1 may be set so as to be higher than a voltage drop (a voltage between both ends) in the sense resistor R2 when electric leakage is occurred, while the resistance value of the sense resistor R2 is set so as to be less than that of the resistor R1 (e.g., R2:0.15Q, R1:4.7Q).

The reference voltage Vref1, used in the electric leakage detecting circuit when earth fault is occurred at the output terminal TO2, is set to an appropriate value, upon request of the size of the earth fault current at which the power supply device (the lighting device) is deactivated.

The main circuits according to First and Second Embodiments may include circuit configurations as shown in Figs. 7 to 9.

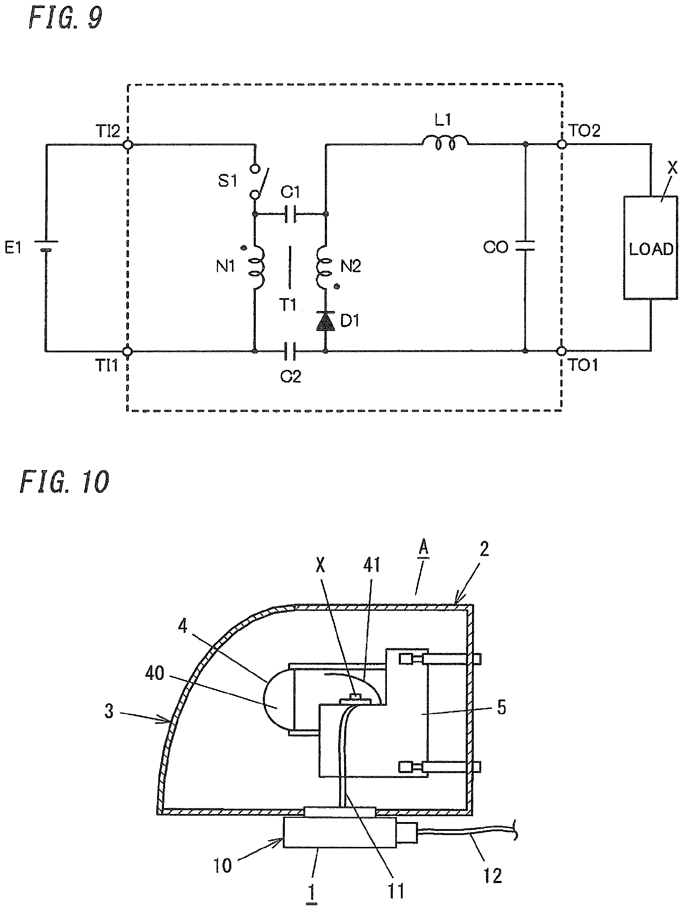

In a circuit configuration shown in Fig. 7, one end of the primary winding N1 of the transformer T1 is connected to one end of the secondary winding N2 of the transformer T1 via the first capacitor C1. One end of the second capacitor C2 is connected to the other end of the primary winding N1 via the switching element S1. An anode of the diode D1 is connected to the other end of the secondary winding N2, and a cathode of the diode D1 is connected to the other end of the second capacitor C2. A circuit configuration shown in Fig. 8 is similar to the circuit configuration shown in Fig. 7 except that the polarity of the secondary winding N2 of the transformer T1 and a connection direction of the diode D1 are in reverse. Further, a circuit configuration shown in Fig. 9 is similar to the circuit configuration shown in Fig. 8 except that the switching element S1 is inserted between the primary winding N1 and the input terminal TI2 of the high voltage side, and the inductor L1 serving as a filter is added.

In First and Second Embodiments described above, the switching element S1 is not limited to a field-effect transistor, and another semiconductor switching element may be adopted. In addition, a rectifying element except the diode D1 may be adopted.

The control circuit CN of the present embodiment controls the output current to become constant, using proportional-integral control performed by the error operational circuit, and a method for controlling the output current is not limited to that. Further, the control circuit CN may be constituted by a microcomputer, and a feedback control can be also performed digitally. In addition, the control circuit CN may control the output voltage to become a predetermined value, as substitute for the constant current control.

### (Third Embodiment)

Fig. 10 shows a lighting fixture according to the invention, and Fig. 11 shows a vehicle according to the invention. The lighting fixture A of the present embodiment is a headlight of a vehicle B, such as a car, and includes the power supply device (the lighting device) 1 explained in First or Second Embodiment, a lighting load X, a fixture body 2, a cover 3, an optical unit 4, a radiator plate 5 and the like.

The fixture body 2 has a box-shape, a front surface of which opens. The radiator plate 5 is fixed to a back surface of the fixture body 2 (that is, the bottom surface of the box-shape). The lighting load X is attached to the radiator plate 5. The optical unit 4 includes a hemispherical lens 40, a reflecting member 41 made of a parabolic mirror, and the like. Light from the lighting load X is emitted effectively through the opening front surface of the fixture body 2. The cover 3 is formed of translucent material, such as silica glass or acrylic resin, into a box-shape, the rear of which opens. The cover 3 is attached to the fixture body 2 so as to cover the opening front surface thereof.

The lighting device 1 includes a printed-wiring board (not shown) on which circuit components constituting the circuit explained in First or Second Embodiment are mounted, and a metallic case 10 that houses the printed-wiring board. The case 10 is attached to the outer bottom surface of the fixture body 2, and an electric wire 11 led out from the top surface of the case 10 is connected to the lighting load X. The lighting device 1 is connected to a battery (the DC power supply E1), which is installed in the vehicle B, through a power harness 12.

Here, in the general car B, a negative electrode of the battery is connected to the car body (so-called "body earth"). Metallic components (e.g., the radiator plate 5, the case 10, and the like) of the lighting fixture A may be also electrically connected to the car body. Or, the radiator plate 5 may be also electrically connected to the case 10 for the purpose of protection against noise or the like. Therefore, there is the fear that a conducting body of the electric wire 11 makes contact with the metallic components of the lighting fixture A or the car body and earth fault is occurred at the output terminal TO1 or TO2 of the lighting device 1, when the conducting body is exposed due to deterioration of a trunking of the electric wire 11 or the like.

However, in the lighting fixture A according to the present embodiment, even when earth fault is occurred, the lighting device 1 is deactivated or the output current is controlled, thereby preventing an accident caused by earth fault current. The lighting fixture A according to the present embodiment can be used not only as the headlight of the vehicle B but also as various light fixtures, such as a taillight of the vehicle B, an interior light of the vehicle B, a road light and a room light.

## Claims

1. A power supply device, comprising:
a switching element (S1) in which switching operation is performed at high frequency;
a transformer (T1) comprising primary and secondary windings (N1, N2), a power-supply voltage of a DC power supply (E1) being applied to the primary winding (N1) via the switching element (S1); and
a rectifying element (D1) connected in series to the secondary winding (N2) of the transformer (T1),
wherein a circuit element composed of at least one of the primary winding (N1) of the transformer (T1) and the switching element (S1) is connected to both ends of a series circuit, including the secondary winding (N2) of the transformer (T1) and the rectifying element (D1), via first and second capacitors (C1, C2),
wherein the both ends of the series circuit is connected to a load (X) via an inductor (L1),
wherein the primary winding (N1) of the transformer (T1), the first capacitor (C1), the secondary winding (N2) of the transformer (T1), and an input side terminal of the rectifying element (D1) are connected in series in that order,
wherein the primary winding (N1) of the transformer (T1) and the secondary winding (N2) of the transformer (T1) are connected to the first capacitor (C1) with anti-polarity,
wherein one end of the switching element (S1) is connected to a connecting point (a) of one end of the primary winding (N1) of the transformer (T1) and the first capacitor (C1),
wherein one end of the inductor (L1) is connected to a connecting point (b) of the first capacitor (C1) and the secondary winding (N2) of the transformer (T1),
wherein the second capacitor (C2) is connected between the other end of the switching element (S1) and an output side terminal of the rectifying element,
wherein the other end of the primary winding (N1) of the transformer (T1) is connected to a positive electrode of the DC power supply (E1),
wherein a connecting point of the switching element (S1) and the second capacitor (C2) is connected to a negative electrode of the DC power supply (E1), and
wherein the load (X) is connected between the other end of the inductor (L1) and a connecting point (c) of the rectifying element and the second capacitor (C2).

2. The power supply device according to claim 1,
wherein the second capacitor (C2) has a larger electric capacity than the first capacitor (C1).

3. The power supply device according to claim 1 or 2,
wherein, in the transformer (T1), a substantive turn ratio of the primary winding (N1) to the secondary winding (N2) is equal to or less than 3.

4. A lighting device (1), comprising the power supply device according to any one of claims 1 to 3,
wherein the load (X) is a lighting load comprising a solid-state light emitting element.

5. A lighting fixture (A), comprising the lighting device (1) according to claim 4, and a fixture body (2) holding the lighting load.

6. A vehicle (B), equipped with the lighting fixture (A) according to claim 5.

## Patentansprüche

1. Stromversorgungsvorrichtung, umfassend:
ein Schaltelement (S1), bei dem ein Schaltvorgang mit einer hohen Frequenz durchgeführt wird;
einen Transformator (T1), der Primär- und Sekundärwicklungen (N1, N2) umfasst, wobei eine Versorgungsspannung einer Gleichstromversorgung (E1) über das Schaltelement (S1) an die Primärwicklung (N1) angelegt wird; und
ein Gleichrichterelement (D1), das in Reihe mit der Sekundärwicklung (N2) des Transformators (T1) verbunden ist,
wobei ein Schaltungselement, das sich mindestens aus der Primärwicklung (N1) des Transformators (T1) und dem Schaltelement (S1) zusammensetzt, mit beiden Enden einer Reihenschaltung, die die Sekundärwicklung (N2) des Transformators (T1) und das Gleichrichterelement (D1) aufweist, über einen ersten und zweiten Kondensator (C1, C2) verbunden ist,
wobei die beiden Enden der Reihenschaltung über einen Induktor (L1) mit einer Last (X) verbunden sind,
wobei die Primärwicklung (N1) des Transformators (T1), der erste Kondensator (C1), die Sekundärwicklung (N2) des Transformators (T1) und ein eingangsseitiger Anschluss des Gleichrichterelements (D1) in dieser Reihenfolge in Reihe verbunden sind,
wobei die Primärwicklung (N1) des Transformators (T1) und die Sekundärwicklung (N2) des Transformators (T1) gegenpolig mit dem ersten Kondensator (C1) verbunden sind,
wobei ein Ende des Schaltelements (S1) mit einem Verbindungspunkt (a) eines Endes der Primärwicklung (N1) des Transformators (T1) und des ersten Kondensators (C1) verbunden ist,
wobei ein Ende des Induktors (L1) mit einem Verbindungspunkt (b) des ersten Kondensators (C1) und der Sekundärwicklung (N2) des Transformators (T1) verbunden ist,
wobei der zweite Kondensator (C2) zwischen dem anderen Ende des Schaltelements (S1) und einem ausgangsseitigen Anschluss des Gleichrichterelements verbunden ist,
wobei das andere Ende der Primärwicklung (N1) des Transformators (T1) mit einer positiven Elektrode der Gleichstromversorgung (E1) verbunden ist,
wobei ein Verbindungspunkt des Schaltelements (S1) und des zweiten Kondensators (C2) mit einer negativen Elektrode der Gleichstromversorgung (E1) verbunden ist, und
wobei die Last (X) zwischen dem anderen Ende des Induktors (L1) und einem Verbindungspunkt (c) des Gleichrichterelements und des zweiten Kondensators (C2) verbunden ist.

2. Stromversorgungsvorrichtung nach Anspruch 1,
wobei der zweite Kondensator (C2) eine größere elektrische Kapazität aufweist als der erste Kondensator (C1).

3. Stromversorgungsvorrichtung nach Anspruch 1 oder 2, wobei in dem Transformator (T1) ein wesentliches Windungsverhältnis der Primärwicklung (N1) zu der Sekundärwicklung (N2) gleich oder kleiner als 3 ist.

4. Beleuchtungsvorrichtung (1), die Stromversorgungsvorrichtung nach einem der Ansprüche 1 bis 3 umfassend,
wobei die Last (X) eine Beleuchtungslast ist, die ein lichtemittierendes Halbleiterelement umfasst.

5. Leuchte (A), umfassend die Beleuchtungsvorrichtung (1) nach Anspruch 4 und einen Aufnahmekörper (2), der die Beleuchtungslast hält.

6. Fahrzeug (B), das mit der Leuchte (A) nach Anspruch 5 ausgestattet ist.

## Revendications

1. Dispositif d'alimentation, comprenant :
un élément de commutation (S1) dans lequel une opération de commutation est effectuée à haute fréquence ;
un transformateur (T1) comprenant des enroulements primaire et secondaire (N1, N2), une tension d'alimentation d'une alimentation continue (E1) étant appliquée à l'enroulement primaire (N1) par l'intermédiaire de l'élément de commutation (S1) ; et
un élément de redressement (D1) connecté en série à l'enroulement secondaire (N2) du transformateur (T1),
dans lequel un élément de circuit composé d'au moins l'un de l'enroulement primaire (N1) du transformateur (T1) et de l'élément de commutation (S1) est connecté aux deux extrémités d'un circuit série, comprenant l'enroulement secondaire (N2) du transformateur (T1) et l'élément de redressement (D1), par l'intermédiaire de premier et deuxième condensateurs (C1, C2),
dans lequel les deux extrémités du circuit série sont connectées à une charge (X) par l'intermédiaire d'une inductance (L1),
dans lequel l'enroulement primaire (N1) du transformateur (T1), le premier condensateur (C1), l'enroulement secondaire (N2) du transformateur (T1), et une borne côté entrée de l'élément de redressement (D1) sont connectés en série dans cet ordre,
dans lequel l'enroulement primaire (N1) du transformateur (T1) et l'enroulement secondaire (N2) du transformateur (T1) sont connectés au premier condensateur (C1) avec anti-polarité,
dans lequel une extrémité de l'élément de commutation (S1) est connectée à un point de connexion (a) d'une extrémité de l'enroulement primaire (N1) du transformateur (T1) et du premier condensateur (C1),
dans lequel une extrémité de l'inductance (L1) est connectée à un point de connexion (b) du premier condensateur (C1) et de l'enroulement secondaire (N2) du transformateur (T1),
dans lequel le deuxième condensateur (C2) est connecté entre l'autre extrémité de l'élément de commutation (S1) et une borne côté sortie de l'élément de redressement,
dans lequel l'autre extrémité de l'enroulement primaire (N1) du transformateur (T1) est connectée à une électrode positive de l'alimentation continue (E1),
dans lequel un point de connexion de l'élément de commutation (S1) et le deuxième condensateur (C2) est connecté à une électrode négative de l'alimentation continue (E1), et
dans lequel la charge (X) est connectée entre l'autre extrémité de l'inductance (L1) et un point de connexion (c) de l'élément de redressement et du deuxième condensateur (C2).

2. Dispositif d'alimentation selon la revendication 1,
dans lequel le deuxième condensateur (C2) a une plus grande capacité électrique que le premier condensateur (C1).

3. Dispositif d'alimentation selon la revendication 1 ou 2,
dans lequel, dans le transformateur (T1), un rapport de tours significatif entre l'enroulement primaire (N1) et l'enroulement secondaire (N2) est inférieur ou égal à 3.

4. Dispositif d'éclairage (1), comprenant le dispositif d'alimentation selon l'une quelconque des revendications 1 à 3,
dans lequel la charge (X) est une charge d'éclairage comprenant un élément d'émission de lumière à semi-conducteurs.

5. Accessoire d'éclairage (A), comprenant le dispositif d'éclairage (1) selon la revendication 4, et un corps d'accessoire (2) contenant la charge d'éclairage.

6. Véhicule (B), équipé de l'accessoire d'éclairage (A) selon la revendication 5.
